# EUROPEAN PATENT APPLICATION

(11) **EP 4 553 658 A1**
(43) Date of publication of application: **14.05.2025**
(21) Application number: 23851651.2
(22) Date of filing: 01.08.2023
(51) Int. Cl.: G06F 9/50

(54) **MEMORY MANAGEMENT METHOD AND ELECTRONIC DEVICE**

(30) Priority: 09.08.2022 CN 202210948168
(71) Applicant: Huawei Technologies Co., Ltd., Shenzhen, Guangdong 518129 (CN)
(72) Inventor: YAO, Wanglai, Shenzhen, Guangdong 518129 (CN)
(74) Representative: Goddar, Heinz J.
(86) International application number: PCT/CN2023/110584
(87) International publication number: WO 2024/032430

(57) **Abstract**

This application provides a memory management method and an electronic device. **In** the method, whether to enable or disable a thread local cache function for each thread in a target process is determined based on a foreground/background attribute of the target process, so that different allocation manners are used for memory allocation to different types of threads. This technical solution and the electronic device help reduce invalid occupation of physical memory by the thread caused due to enabling of a tcache function that has no significant improvement on user experience, help improve utilization of the limited physical memory by the electronic device, and help improve user experience of the electronic device.

## Description

This application claims priority to Chinese Patent Application No. 202210948168.X, filed with the China National Intellectual Property Administration on August 9, 2022, and entitled "MEMORY MANAGEMENT METHOD AND ELECTRONIC DEVICE", which is incorporated herein by reference in its entirety.

### TECHNICAL FIELD

This application relates to the field of information technologies, and specifically, to a memory management method and an electronic device.

### BACKGROUND

An operating system usually divides physical memory into fixed-size memory page frames (for example, in 4K or 16K). When a user-mode process accesses memory that is not actually allocated, a page fault is caused, and then the operating system may allocate an actual physical memory page frame to the process. When the user-mode process does not require a specific block of memory (whose size is an integer multiple of that of the memory page frame), the memory may be returned to the operating system through a system call.

When allocating memory to a thread of an application, an electronic device usually does not reclaim a memory page frame in an idle state in time. Invalid occupation of memory by a thread that requests the memory earlier makes it more difficult for a thread of an application that requests the memory later to be allocated with sufficient memory. As a result, a running speed of the thread that requests the memory later is affected. In this case, how to improve a method for allocating memory by the electronic device to improve memory utilization is a problem that needs to be resolved.

### SUMMARY

This application provides a memory management method and an electronic device. Whether a thread local cache function needs to be enabled for a thread included in a process is determined based on a foreground/background attribute of the process. This helps allocate physical memory to actually active threads to improve running speeds of these threads, helps improve memory utilization and reduce idle occupancy of memory, and helps improve user experience of the electronic device.

According to a first aspect, a memory management method is provided, including: The electronic device obtains a first attribute of a target process, where the first attribute indicates that the target process is a foreground process or a background process, and the target process includes a target thread. The electronic device determines, based on the first attribute, to enable or disable a thread local cache function of the target thread.

In a possible implementation, when the first attribute indicates that the target process is a foreground process, the electronic device determines to enable the thread local cache function of the target thread. When the first attribute indicates that the target thread is a background process, the electronic device determines to disable the thread local cache function of the target thread.

It should be noted that, when the thread local cache (tcache) function of the target thread is in an enabled state, the electronic device does not repeatedly enable the tcache function when determining to enable the tcache function for the target thread. Similarly, when the tcache function of the target thread is enabled or disabled, the electronic device does not repeatedly disable the tcache function when determining to disable the tcache function for the target thread.

In this technical solution, the electronic device determines, based on the foreground/background attribute of the process, whether to enable the tcache function for the thread included in the process. In comparison with a memory allocation method in which the tcache function is enabled for all threads by default, in the memory allocation method provided in this technical solution, different threads are distinguished first. This helps allocate limited physical memory to a specific thread, improve memory utilization to some extent, reduce idle occupancy of the physical memory, and improve user experience of the electronic device to some extent.

With reference to the first aspect, in some implementations of the first aspect, when the first attribute indicates that the target process is a foreground process, the electronic device determines, with reference to a second attribute of the target thread, to enable the thread local cache function of the target thread, where the second attribute indicates that the target thread is a key thread, and the key thread is a thread related to user interaction. The electronic device enables the thread local cache function of the target thread.

In this technical solution, the electronic device enables the tcache function only for threads related to user interaction in the foreground process, and more physical memory may be used by the threads related to user interaction. This helps improve computational speeds of these threads, and idle occupancy occurs on less physical memory. Implementation of this technical solution helps intuitively improve user experience of the electronic device.

With reference to the first aspect, in some implementations of the first aspect, the key thread includes one or more of the following: a thread for receiving a user input event, a user interface thread for drawing an interface, and a render thread for rendering a picture.

In the foreground process, the tcache function may be enabled for a thread related to user input, a thread related to user interface drawing, and the thread for rendering a picture. In this technical solution, the electronic device may enable the tcache function only for these determined types of threads, so that directional preferential allocation of physical memory can be implemented to some extent. This helps implement customization of the electronic device. For example, for an electronic device that runs a game, according to this technical solution, memory consumption of another thread and memory resource contention with a key thread can be reduced while a running speed of a game-related thread is ensured, so that user experience of the electronic device in this scenario can be improved.

In a possible implementation, the electronic device allocates memory to the target thread from a thread local cache of the target thread.

In a possible implementation, when the electronic device cannot allocate memory to the target thread from the thread local cache of the target thread, the electronic device allocates the memory from global memory to the target thread.

With reference to the first aspect, in some implementations of the first aspect, before the electronic device determines, based on the first attribute, to enable or disable the thread local cache function of the target thread, in response to a first operation of a user, the electronic device sets the first attribute to indicate that the target process is a foreground process.

In this technical solution, the electronic device may determine, in response to the user operation, types of different processes running on the electronic device, and determine which processes are foreground processes, so that the electronic device can dynamically enable the tcache function for different threads in response to the user operation, and dynamically allocate physical memory to the different threads, to allocate memory to different threads more appropriately. This helps improve overall user experience of the electronic device.

With reference to the first aspect, in some implementations of the first aspect, in response to a second operation of the user, the electronic device sets the first attribute to indicate that the target process is a background process.

In this technical solution, the electronic device may set the foreground process as the background process in response to the user operation, so that the electronic device can further determine, based on the user operation, a method for allocating memory to a thread included in a target process whose foreground/background attribute is changed. This helps improve efficiency of responding to the user operation by the electronic device, and helps improve user experience of the electronic device.

With reference to the first aspect, in some implementations of the first aspect, when the first attribute indicates that the target process is a background process, the electronic device determines, based on the first attribute, to disable the thread local cache function of the target thread. The electronic device disables the thread local cache function of the target thread.

In this technical solution, when the first attribute indicates that the target process is a background process, the electronic device disables, based on the first attribute, the tcache function of the target thread included in the target process, so that the target thread no longer requests memory from the global memory through the tcache. This helps the electronic device allocate physical memory to another thread other than the thread included in the background process, and helps improve utilization of the physical memory by different threads on the electronic device, improve efficiency of allocating the physical memory by the electronic device, and improve user experience of the electronic device.

With reference to the first aspect, in some implementations of the first aspect, the electronic device reclaims a thread local cache of the target thread.

In this technical solution, for the target thread in the background process, the electronic device may reclaim the tcache used by the target thread. This helps reduce idle occupancy of the physical memory by the target thread, helps allocate more physical memory to another thread other than the thread included in the background process, and helps improve the utilization of the physical memory by different threads on the electronic device, improve the efficiency of allocating the physical memory by the electronic device, and improve user experience of the electronic device.

With reference to the first aspect, in some implementations of the first aspect, the electronic device reclaims an idle memory page in a slab unit of the target process.

In this technical solution, the electronic device may further reclaim the idle memory page in the slab unit used by the background process. In comparison with a method in which all idle memory pages in a slab cache are reclaimed as a whole, in this technical solution, the idle memory page can be reclaimed in time, so that reclaimed physical memory can be allocated to another thread for use. This helps reduce the idle occupancy of the physical memory, helps improve the utilization of the physical memory, and also helps improve the efficiency of allocating the physical memory by the electronic device, and improve user experience of the electronic device.

According to a second aspect, a memory management method is provided. An electronic device obtains a first attribute of a target process, where the first attribute indicates that the target process is a foreground process or a background process. The electronic device determines, based on the first attribute, whether to reclaim an idle memory page in a slab unit of the target process.

In this technical solution, the electronic device may determine, based on a foreground/background attribute of a process, whether to reclaim an idle memory page used by the process. In comparison with a method in which idle memory pages in a slab unit are reclaimed as a whole, in this technical solution, efficiency of reclaiming an idle memory page by the electronic device can be improved, so that reclaimed physical memory can be allocated to another thread for use. This helps reduce idle occupancy of physical memory, helps improve utilization of the physical memory, and also helps improve efficiency of allocating the physical memory by the electronic device, and improve user experience of the electronic device.

With reference to the second aspect, in some implementations of the second aspect, when the first attribute indicates that the target process is a background process, the electronic device determines to reclaim the idle memory page in the slab unit of the target process. The electronic device reclaims the idle memory page in the slab unit of the target process.

In this technical solution, for the idle memory page in the slab unit used in the background process, the physical memory obtained through reclaiming may be allocated to a foreground process. This helps improve a running speed of the foreground process, helps reduce occupancy of the idle memory page by the background process, helps improve the utilization of the physical memory, and also helps improve the efficiency of allocating the physical memory by the electronic device, and improve user experience of the electronic device.

With reference to the second aspect, in some implementations of the second aspect, the target process includes a target thread, and the electronic device disables a thread local cache function of the target thread.

In this technical solution, for threads in the background process, the electronic device may disable thread local cache (tcache) functions of these threads, so that the target threads no longer request memory from global memory through tcache. This helps the electronic device allocate the physical memory to another thread other than the thread included in the background process, and helps improve the utilization of the physical memory by different threads on the electronic device, improve the efficiency of allocating the physical memory by the electronic device, and improve user experience of the electronic device.

With reference to the second aspect, in some implementations of the second aspect, the electronic device reclaims a thread local cache of the target thread.

In this technical solution, for the target thread in the background process, the electronic device may reclaim the tcache used by the target thread. This helps reduce idle occupancy of the physical memory by the target thread, helps allocate more physical memory to another thread other than the thread included in the background process, and helps improve the utilization of the physical memory by different threads on the electronic device, improve the efficiency of allocating the physical memory by the electronic device, and improve user experience of the electronic device.

According to a third aspect, an electronic device is provided, including a processor and a storage. The storage stores one or more computer programs, and the one or more computer programs include instructions. When the instructions are executed by the processor, the processor is configured to obtain a first attribute of a target process, where the first attribute indicates that the target process is a foreground process or a background process, and the target process includes a target thread. The processor is further configured to determine, based on the first attribute, to enable or disable a thread local cache function of the target thread.

With reference to the third aspect, in some implementations of the third aspect, when the first attribute indicates that the target process is a foreground process, the processor is further configured to determine, with reference to a second attribute of the target thread, to enable the thread local cache function of the target thread, where the second attribute indicates that the target thread is a key thread, and the key thread is a thread related to user interaction. The processor is further configured to enable the thread local cache function of the target thread.

With reference to the third aspect, in some implementations of the third aspect, the key thread includes one or more of the following: a thread for receiving a user input event, a user interface thread for drawing an interface, and a render thread for rendering a picture.

With reference to the third aspect, in some implementations of the third aspect, before the electronic device determines, based on the first attribute, to enable or disable the thread local cache function of the target thread, the processor is further configured to set, in response to a first operation of a user, the first attribute to indicate that the target process is a foreground process.

With reference to the third aspect, in some implementations of the third aspect, when the first attribute indicates that the target process is a background process, the processor is further configured to set, in response to a second operation of the user, the first attribute to indicate that the target process is a background process.

With reference to the third aspect, in some implementations of the third aspect, the processor is further configured to determine, based on the first attribute, to disable the thread local cache function of the target thread. The processor is further configured to disable the thread local cache function of the target thread.

With reference to the third aspect, in some implementations of the third aspect, the processor is further configured to reclaim a tcache of the target thread.

With reference to the third aspect, in some implementations of the third aspect, the processor is further configured to reclaim an idle memory page in a slab cache of the target process.

According to a fourth aspect, an electronic device is provided, including a processor and a storage. The storage stores one or more computer programs, and the one or more computer programs include instructions. When the instructions are executed by the processor, the processor is configured to obtain a first attribute of a target process, where the first attribute indicates that the target process is a foreground process or a background process. The processor is further configured to determine, based on the first attribute, whether to reclaim an idle memory page in a slab unit of the target process.

With reference to the fourth aspect, in some implementations of the fourth aspect, when the first attribute indicates that the target process is a background process, the processor is further configured to determine to reclaim the idle memory page in the slab unit of the target process. The processor is further configured to reclaim the idle memory page in the slab unit of the target process.

With reference to the fourth aspect, in some implementations of the fourth aspect, the processor is further configured to disable a thread local cache function of a target thread.

With reference to the fourth aspect, in some implementations of the fourth aspect, the processor is further configured to reclaim a thread local cache of the target thread.

According to a fifth aspect, a memory management apparatus is provided, including an obtaining unit and a processing unit. The obtaining unit is configured to obtain a first attribute of a target process, where the first attribute indicates that the target process is a foreground process or a background process, and the target process includes a target thread. The processing unit is configured to determine, based on the first attribute, to enable or disable a thread local cache function of the target thread.

With reference to the fifth aspect, in some implementations of the fifth aspect, when the first attribute indicates that the target process is a foreground process, the processing unit is further configured to determine, with reference to a second attribute of the target thread, to enable the thread local cache function of the target thread, where the second attribute indicates that the target thread is a key thread, and the key thread is a thread related to user interaction. The processing unit is further configured to enable the thread local cache function of the target thread.

With reference to the fifth aspect, in some implementations of the fifth aspect, the key thread includes one or more of the following: a thread for receiving a user input event, a user interface thread for drawing an interface, and a render thread for rendering a picture.

With reference to the fifth aspect, in some implementations of the fifth aspect, before the electronic device determines, based on the first attribute, to enable or disable the thread local cache function of the target thread, the processing unit is further configured to set, in response to a first operation of a user, the first attribute to indicate that the target process is a foreground process.

With reference to the fifth aspect, in some implementations of the fifth aspect, the processing unit is further configured to set, in response to a second operation of the user, the first attribute to indicate that the target process is a background process.

With reference to the fifth aspect, in some implementations of the fifth aspect, when the first attribute indicates that the target process is a background process, the processing unit is further configured to determine, based on the first attribute, to disable the thread local cache function of the target thread. The processing unit is further configured to disable the thread local cache function of the target thread.

With reference to the fifth aspect, in some implementations of the fifth aspect, the processing unit is further configured to reclaim a thread local cache of the target thread.

With reference to the fifth aspect, in some implementations of the fifth aspect, the processing unit is further configured to reclaim an idle memory page in a slab unit of the target process.

According to a sixth aspect, a memory management apparatus is provided, including an obtaining unit and a processing unit. The obtaining unit is configured to obtain a first attribute of a target process, where the first attribute indicates that the target process is a foreground process or a background process. The processing unit is configured to determine, based on the first attribute, whether to reclaim an idle memory page in a slab unit of the target process.

With reference to the sixth aspect, in some implementations of the sixth aspect, when the first attribute indicates that the target process is a background process, the processing unit is further configured to determine to reclaim the idle memory page in the slab unit of the target process. The processing unit is further configured to reclaim the idle memory page in the slab unit of the target process.

With reference to the sixth aspect, in some implementations of the sixth aspect, the target process includes a target thread, and the processing unit is further configured to disable a thread local cache function of the target thread.

With reference to the sixth aspect, in some implementations of the sixth aspect, the processing unit is further configured to reclaim a thread local cache of the target thread.

According to a seventh aspect, a computer program product is provided. The computer program product includes computer program code. When the computer program code is run on a computer, the method according to any one of the first aspect or the possible implementations of the first aspect is performed.

According to an eighth aspect, a computer program product is provided. The computer program product includes computer program code. When the computer program code is run on a computer, the method according to any one of the second aspect or the possible implementations of the second aspect is performed.

According to a ninth aspect, a computer-readable storage medium is provided. The computer-readable storage medium stores computer instructions. When the computer instructions are run on a computer, the method according to any one of the first aspect or the possible implementations of the first aspect is performed.

According to a tenth aspect, a computer-readable storage medium is provided. The computer-readable storage medium stores computer instructions. When the computer instructions are run on a computer, the method according to any one of the second aspect or the possible implementations of the second aspect is performed.

According to an eleventh aspect, a chip is provided, including a processor configured to read instructions stored in a storage. When the processor executes the instructions, the chip is enabled to implement the method according to any one of the first aspect or the possible implementations of the first aspect.

According to a twelfth aspect, a chip is provided, including a processor configured to read instructions stored in a storage. When the processor executes the instructions, the chip is enabled to implement the method according to any one of the second aspect or the possible implementations of the second aspect.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3(a) and FIG. 3(b) are an application scenario of a memory management method according to an embodiment of this application;
FIG. 4 is a diagram of a memory management method according to an embodiment of this application;
FIG. 5 is a diagram of another memory management method according to an embodiment of this application;
FIG. 6 is a diagram of a still another memory management method according to an embodiment of this application;
FIG. 7 is a diagram of a still another memory management method according to an embodiment of this application;
FIG. 8 is a diagram of a still another memory management method according to an embodiment of this application;
FIG. 9 is a diagram of an electronic device according to an embodiment of this application; and
FIG. 10 is a diagram of a memory management apparatus according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

The method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). The method provided in embodiments of this application may also be applied to a network device such as a server of the electronic device. A specific type of the electronic device is not limited in embodiments of this application.

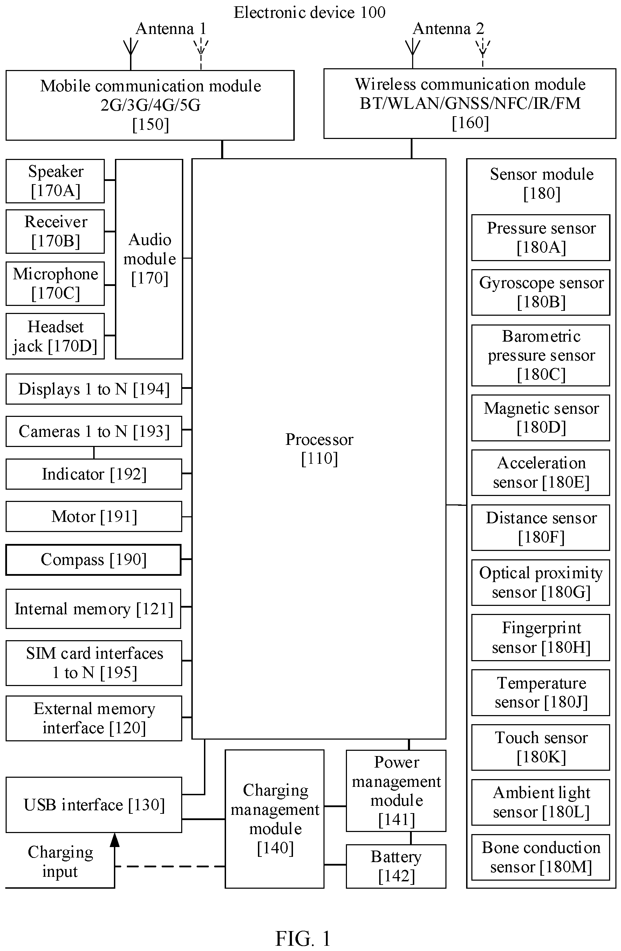

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A storage may be further disposed in the processor 110, and is configured to store instructions and data. In some embodiments, the storage in the processor 110 is a cache. The storage may store instructions or data that has been recently used or cyclically used by the processor 110. If the processor 110 needs to use the instructions or the data again, the processor may directly invoke the instructions or the data from the storage. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to perform data transmission between the electronic device 100 and the peripheral device, or may be configured to connect to a headset for playing audio through the headset. The interface may be further configured to connect to another electronic device such as an AR device.

It may be understood that, an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 can provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements the display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194. N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or N cameras 193. N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented by using the NPU.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and an address book) and the like that are created during use of the electronic device 100. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. The electronic device 100 may be used to listen to music or answer a call in a hands-free mode through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the user's mouth, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces. N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of an electronic device 100 may use a layered architecture, an event-driven architecture, a microkernel architecture, a microservice architecture, or a cloud architecture. In an embodiment of this application, an Android system with a layered architecture is used as an example to describe a software structure of the electronic device 100.

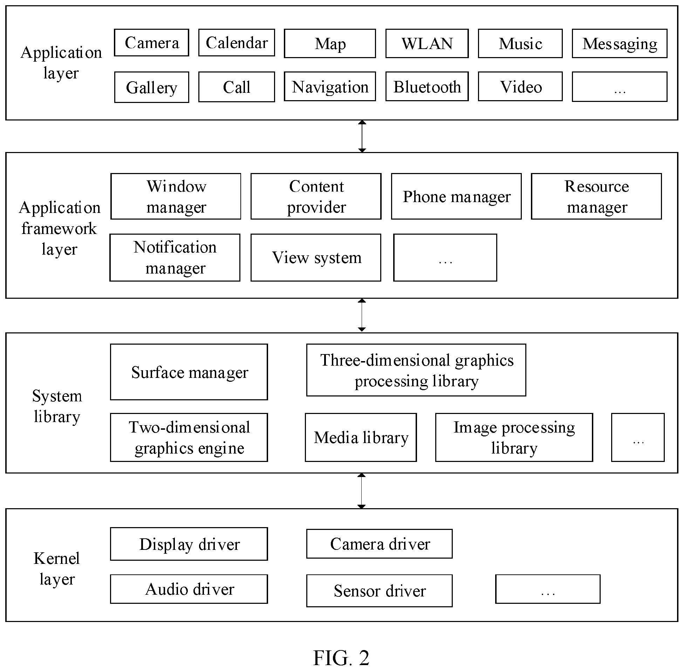

FIG. 2 is a block diagram of a software structure of an electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may give a notification that appears in a top status bar of the system in a form of graph or scroll bar text, for example, a notification of an application that is run on a background, or may give a notification that appears on a screen in a form of dialog window. For example, text information is displayed in the status bar, a prompt tone is played, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

Due to limited software and hardware resources of an electronic device, to improve running efficiency of the electronic device and improve user experience, the software and hardware resources of the electronic device need to be appropriately allocated and scheduled. Memory management is a technology for allocating and using memory resources of the electronic device, and a main objective of the memory management is how to efficiently and quickly allocate the memory resources and release and reclaim the memory resources at an appropriate time.

The electronic device may include a plurality of memory allocators. The following uses a Jason Evans memory allocator (Jason Evans malloc, Jemalloc) as an example to describe a memory management method of an electronic device provided in this application. It should be noted that the memory management method provided in embodiments of this application may be further applied to another type of memory allocator. In the following embodiments, descriptions using the Jemalloc as an example should not constitute a limitation on this application.

The Jemalloc is a memory allocator, and is located between a system layer and an application layer. The Jemalloc can respond to an allocation request of a user, request memory from a system kernel, and then return obtained memory to a user program.

To improve performance of concurrent allocation for and memory release of a plurality of threads in an application, the Jemalloc classifies bin managers into a plurality of types for memory requests of different sizes. When the plurality of threads request memory of different sizes, the plurality of threads only need to obtain the memory from corresponding bin managers respectively. To reduce internal fragmentation in a memory page, a slab (slab) unit is further added to the bin manager. Each slab unit includes a plurality of regions (regions) of a same size, and each slab unit has a corresponding bitmap table to describe whether an internal region in the slab unit is idle. During memory allocation, an idle region in a slab unit that is not used up is allocated to a memory requester. In this case, a status of the allocated region changes to a non-idle state. When the memory is released, the status of the region changes from the non-idle state to an idle state. A size of the slab unit needs to be an integer multiple of a size of the memory page (or referred to as a memory page frame), and also needs to be an integer multiple of a size of a memory request corresponding to the bin manager. Each slab unit may include 1 to 7 memory page frames.

Jemalloc further provides a thread local cache (thread cache, tcache). To be specific, memory released by each thread is not immediately returned to a Jemalloc global memory allocator. Instead, the memory is first cached in the thread locally. When the thread needs to request memory, the thread can directly obtain and use the memory from the tcache. In this way, a lock contention problem of memory management between the plurality of threads can be resolved, and therefore performance of concurrent memory requests and release of the plurality of threads can be further improved.

Before embodiments of this application are formally described, definitions of terms that may be used in the following embodiments are first explained.
1. Foreground process: The foreground process is a process running in a foreground of an operating system, and may generally include a process that needs to interact with a user.
2. Background process: The background process is a process running in a background of an operating system, and may be used to periodically execute a specific task or wait for processing some specific events. Generally, the background process does not need to interact with a user.
3. Base address: A kernel of an operating system manages memory in units of memory pages. A memory page is usually 4K or 16K. A base address of a memory page is a starting address of the memory page and is aligned with a size of the memory page.

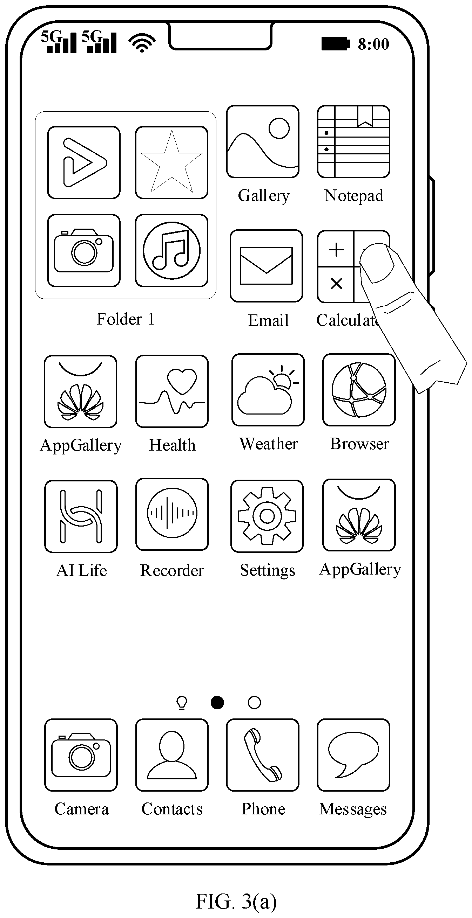

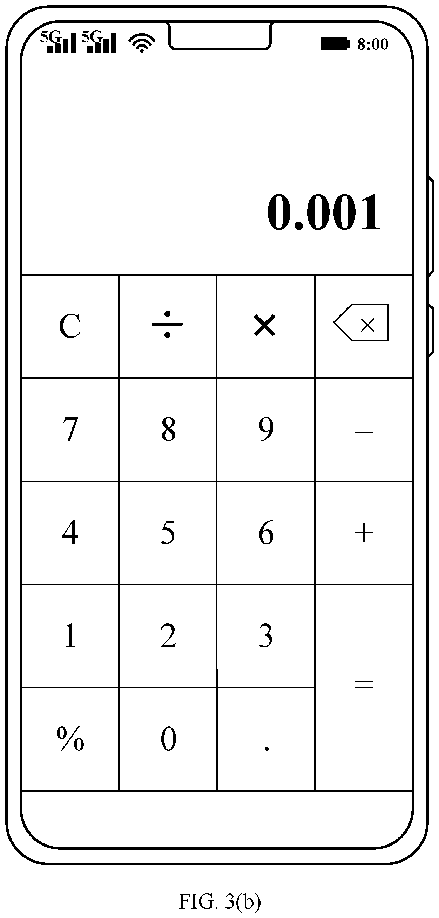

FIG. 3(a) and FIG. 3(b) provide an example of an application scenario of a memory management method according to this application.

An electronic device displays an application desktop. A process used to display the application desktop may be referred to as a desktop process. The desktop process may include a thread (thread A) used to draw an icon, a thread (thread B) used to draw a folder, another thread, and the like. When the electronic device displays the desktop, the desktop process is a foreground process. Related threads used to display a user interface (user interface, UI), for example, the thread A and the thread B, may be considered as key threads. When determining that the thread A and the thread B are key threads of the foreground process, the electronic device may separately enable a tcache function for the thread A and the thread B. Further, when the thread A and/or the thread B request/requests memory from the electronic device, a Jemalloc memory allocator may preferentially allocate memory from a tcache to the thread A and/or the thread B.

When a user taps an icon of "Calculator" on the desktop, the electronic device displays an interface of the calculator in response to an operation of the user.

A process used to draw the interface of the calculator may be referred to as a calculator process. The calculator process may include a thread (thread C) used by the user to draw symbols on the interface of the calculator, a thread (thread D) used to obtain user input information, another thread, and the like. When the electronic device displays the interface of the calculator, the calculator process is a foreground process. Related threads used to display the interface of the calculator and the like, for example, the thread C and the thread D, may be considered as key threads. When determining that the thread C and the thread D are key threads of the foreground process, the electronic device may separately enable a tcache function for the thread C and the thread D. Correspondingly, when the thread C or the thread D or both request memory from the electronic device, the Jemalloc memory allocator may preferentially allocate memory from the tcache to the thread C and/or the thread D.

In FIG. 3(a) and FIG. 3(b), in a process in which the electronic device switches from the user interface of the application desktop to a user interface of the calculator, a foreground/background attribute of a process running on the electronic device changes. To be specific, the desktop process is switched from the foreground process to the background process, and the calculator process becomes a foreground process. Because the desktop process becomes a background process, the thread A and the thread B included in the desktop process are also switched to a background for running. In this case, the electronic device may disable the tcache functions of the thread A and the thread B, reclaim the tcache used by the thread A and the thread B, and may also reclaim an idle memory page in a slab unit in the desktop process to allocate the memory page to the foreground process or another more important thread for use, so that utilization of the tcache and the memory page included in the slab unit is higher. This helps improve user experience of the electronic device.

Conversely, when the user exits from the interface of the calculator in FIG. 3(b) and returns to the application desktop, the foreground/background attribute of the process running on the electronic device also changes. The calculator process becomes a background process, and the desktop process becomes a foreground process. After detecting a foreground/background process change event, the electronic device may re-detect a current foreground process and a key thread of the foreground process, to enable a tcache function for the key thread of the foreground process, and to allocate memory to the thread in response to a memory request of the thread. Alternatively, the electronic device may re-detect a current background process and disable a tcache function of a thread included in the background process, and may also reclaim the tcache and an idle memory page in a slab unit occupied by the process.

It should be noted that FIG. 3(a) and FIG. 3(b) merely provide an example of an application scenario in which the memory management method provided in embodiments of this application is used. It should be understood that the example scenario does not constitute a limitation on the memory management method provided in this application.

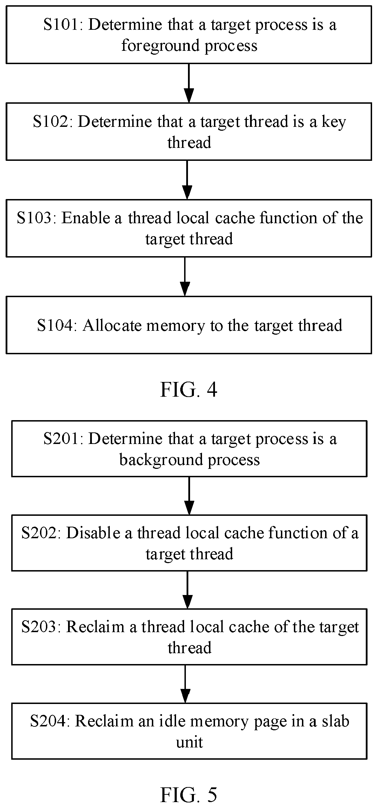

FIG. 4 is a diagram of a memory management method according to an embodiment of this application.

S101: An electronic device determines that a target process is a foreground process.

When the target process or a target thread requests memory from an operating system, in response to a memory request, the electronic device may determine, based on an attribute of the target process and/or an attribute of the target thread, to allocate memory to the target thread in an optional manner.

In some embodiments, the target thread sends the memory request to the electronic device. The electronic device obtains a first attribute in response to the request. The first attribute indicates that a process (the target process) to which the target thread belongs is a foreground process or a background process.

Specifically, a Jemalloc memory allocator of the electronic device may obtain the first attribute from the operating system.

Optionally, after obtaining the first attribute, the electronic device may add, for a Jemalloc instance of the target process, identification information used to identify the first attribute. When the first attribute of the target process changes, the Jemalloc memory allocator may obtain a value of the first attribute from the operating system and synchronize the value to the identification information, to facilitate reference during subsequent memory allocation.

The electronic device may obtain the first attribute from the operating system, or may obtain the first attribute from the identification information of the first attribute.

In some embodiments, the electronic device may determine, by obtaining the first attribute, whether the target process is a foreground process. Further, the electronic device determines, based on whether the target process is a foreground process, whether to enable a tcache function for the target thread in the target process. When the target process is a foreground process, the electronic device enables the tcache function for the target thread included in the target process. When the target process is not a foreground process, the electronic device does not enable the tcache function for the target thread in the target process.

In some other embodiments, the electronic device may preset a first process set, and the first process set may include at least one process. The electronic device may determine, based on whether the target process is a process belonging to the first process set, whether to enable the tcache function for the target thread in the target process. Specifically, when the target process belongs to the first process set, the electronic device enables the tcache function for the target thread included in the target process. When the target process does not belong to the first process set, the electronic device does not enable the tcache function for the target thread included in the target process. The target process may be provided with attribute information used to identify the process, and the attribute information may indicate whether the target process belongs to the first process set. The electronic device may determine, by obtaining the attribute information, whether the target process belongs to the first process set.

In still some other embodiments, the electronic device may preset a second process set, and the second process set may include at least one process. The electronic device may determine, based on whether the target process is a process belonging to the second process set, whether to enable the tcache function for the target thread in the target process. Specifically, when the target process belongs to the first process set, the electronic device does not enable the tcache function for the target thread included in the target process. When the target process belongs to the first process set, the electronic device enables the tcache function for the target thread included in the target process. The target process may be provided with attribute information used to identify the process, and the attribute information may indicate whether the target process belongs to the second process set. The electronic device may determine, by obtaining the attribute information, whether the target process belongs to the second process set.

The tcache function is enabled for a thread in a specific process, so that the electronic device can reduce a probability of idle occupancy of a tcache caused due to occupancy of the tcache by an unnecessary user thread. Therefore, utilization of the tcache by an application thread can be improved, appropriate allocation of memory resources of the electronic device can be implemented to some extent, and user experience of the electronic device can be improved.

Optionally, the electronic device may set the target process as a foreground process or a background process in response to an operation of a user.

S102: The electronic device determines that the target thread is a key thread.

For a thread included in the target process, the electronic device may further determine, based on the attribute of the target thread, whether to enable the tcache function for the target thread. The attribute of the target thread may be referred to as a second attribute.

In some embodiments, the target thread sends the memory request to the electronic device. The electronic device obtains the second attribute of the target thread in response to the request.

In some embodiments, the second attribute indicates whether the target thread is a key thread. The key thread may include one or more of the following threads: a thread for receiving a user input event, a UI thread for drawing an interface, a render (render) thread for rendering a picture, or the like. When the target thread is a key thread, the electronic device enables the tcache function for the target thread. When the target thread is not a key thread, the electronic device does not enable the tcache function for the target thread.

It should be noted that different processes each may include one or more of the thread for receiving the user input event, the UI thread for drawing the interface, or the render thread for rendering the picture. Threads with a same function may be simultaneously included in a plurality of different processes. The listed types of key threads are merely used to distinguish between thread functions, and are not intended to limit a specific thread.

In some other embodiments, the second attribute indicates whether the target thread is a thread belonging to a first thread set, and the first thread set may be a set that is preset by the electronic device and that includes at least one thread. Specifically, when the electronic device determines, based on the second attribute, that the target thread is a thread belonging to the first thread set, the electronic device enables the tcache function for the target thread. When determining, based on the second attribute, that the target thread is not a thread belonging to the first thread set, the electronic device does not enable the tcache function for the target thread.

In still some other embodiments, the second attribute indicates whether the target thread is a thread belonging to a second thread set, and the second thread set may be a set that is preset by the electronic device and that includes at least one thread. Specifically, when the electronic device determines, based on the second attribute, that the target thread is not a thread belonging to the second thread set, the electronic device enables the tcache function for the target thread. When determining, based on the second attribute, that the target thread is a thread belonging to the second thread set, the electronic device enables the tcache function for the target thread.

It is specified that the tcache function is enabled only for a specific thread in the foreground process. This helps further implement appropriate allocation of memory resources of the electronic device. The tcache function is enabled particularly for a thread for obtaining user input, the thread for drawing the user interface, the thread for rendering the picture, and the like that are highly perceived by the user. Enabling the tcache function only for such threads can significantly improve user experience.

S103: The electronic device enables the tcache function of the target thread.

The electronic device may configure the tcache function of the target thread to be disabled by default, or the electronic device may disable the tcache function of the target thread after previous running of the target thread ends. Alternatively, the electronic device may disable the tcache function of the target thread when the target process corresponding to the target thread is switched from running on a foreground to running on a background.

In some embodiments, before S103, the tcache function of the target thread has been enabled. When determining to enable the tcache function for the target thread, the electronic device detects that the tcache function of the target thread has been enabled, and the electronic device keeps the tcache function of the target thread enabled without repeating an action of enabling the function.

In some other embodiments, before S103, the tcache function of the target thread is in a disabled state. When determining to enable the tcache function for the target thread, the electronic device detects that the tcache function of the target thread is in the disabled state, and the electronic device enables the tcache function of the target thread.

Optionally, when determining to enable the tcache function for the target thread, the electronic device may immediately enable the tcache function of the target thread, or the electronic device may enable the tcache function for the target thread after a preset time interval. Alternatively, the electronic device may enable the tcache function for the target thread when a preset condition is met (for example, when the target thread requests memory from the electronic device again, the electronic device directly enables the tcache function for the target thread).

S104: The electronic device allocates memory to the target thread.

After the electronic device enables the tcache function for the target thread, the electronic device may allocate memory to the target thread.

In some embodiments, after the target thread enables the tcache function, the electronic device allocates specific space of tcache to the target thread, and the electronic device may preferentially allocate memory from the allocated tcache to the target thread. When memory from the tcache cannot be allocated to the electronic device (for example, a size of memory space corresponding to the tcache does not meet a requirement of a size of memory requested by the target thread), the electronic device allocates memory from global memory to the target thread.

In this embodiment of this application, when performing memory management, the electronic device enables the tcache function for the target thread by determining whether the target process is a foreground process and whether the thread in the target process is the key thread. This helps allocate limited physical memory to a specific thread, improve memory utilization to some extent, reduce idle occupancy of the physical memory, and improve user experience of the electronic device to some extent.

FIG. 5 shows another memory management method according to an embodiment of this application.

S201: An electronic device determines that a target process is a background process.

For example, as shown in FIG. 3(a) and FIG. 3(b), when a user starts calculator software, the foregoing desktop process is switched from the foreground process to the background process; or when the user exits the calculator software, the calculator process is switched from the foreground process to the background process.

In some embodiments, when the electronic device detects that a foreground-background switching event of the process occurs, the electronic device may determine whether the target process is a background process.

**In** some other embodiments, for some newly created background processes, the electronic device may also perform detection on whether these processes are background processes.

The target process may include attribute information (a first attribute), and the attribute information may indicate whether the target process is a background process. The electronic device may perform detection on the first attribute of the target process, to determine whether the target process is a background process.

Specifically, a Jemalloc memory allocator of the electronic device may obtain the first attribute from an operating system.

Optionally, after obtaining the first attribute, the electronic device may add, for a Jemalloc instance of the target process, identification information used to identify the first attribute. When the first attribute of the target process changes, the Jemalloc memory allocator may obtain a value of the first attribute from the operating system and synchronize the value to the identification information, to facilitate reference during subsequent memory allocation.

The electronic device may obtain the first attribute from the operating system, or may obtain the first attribute from the identification information of the first attribute.

Alternatively, the electronic device may preset a third process set, and the attribute information included in the target process may indicate whether the target process is a process in the third process set. When the electronic device obtains the attribute information of the target process, the electronic device may determine whether the target process belongs to the third process set. For a target process that belongs to the third process set, the electronic device may perform S202 and the following steps. For a target process that does not belong to the third process set, the electronic device may not perform S202 and the following steps.

Alternatively, the electronic device may preset a fourth process set, and an attribute included in the target process may indicate whether the target process is a process in the fourth process set. When the electronic device obtains the attribute information of the target process, the electronic device may determine whether the target process belongs to the fourth process set. For a target process that belongs to the fourth process set, the electronic device may not perform S202 and the following steps. For a target process that does not belong to the fourth process set, the electronic device may perform S202 and the following steps.

Optionally, the electronic device may set the target process as a foreground process or a background process in response to an operation of the user.

S202: The electronic device disables a tcache function of the target thread.

In some embodiments, when the electronic device determines that the target process belongs to a background process, the electronic device may disable tcache functions of all threads included in the target process. When the electronic device determines that the target process does not belong to a background process, the electronic device may not disable the tcache functions of all threads included in the target process.

In some other embodiments, when determining that the target process is a process belonging to the third process set, the electronic device may disable the tcache functions of all threads included in the target process. When determining that the target process is not a process belonging to the third process set, the electronic device may not disable the tcache functions of all threads included in the target process.

In still some other embodiments, when determining that the target process is a process belonging to the fourth process set, the electronic device does not disable the tcache functions of all threads included in the target process. When determining that the target process is not a process belonging to the fourth process set, the electronic device disables the tcache functions of all threads included in the target process.

Optionally, the electronic device may further preset the third thread set or the fourth thread set, and the electronic device may perform detection on an attribute of the target thread. The attribute indicates whether the target thread belongs to the third thread set or whether the target thread belongs to the fourth thread set. When the electronic device determines that the target thread belongs to the third thread set, or when the electronic device determines that the target thread does not belong to the fourth thread set, the electronic device may disable the tcache function of the target thread. When the electronic device determines that the target thread does not belong to the third thread set, or when the electronic device determines that the target thread belongs to the fourth thread set, the electronic device may not disable the tcache function of the target thread.

A thread whose tcache function is disabled no longer requests memory from global memory through tcache. This helps the electronic device allocate physical memory to another thread, and helps improve utilization of the physical memory by different threads on the electronic device, improve efficiency of allocating the physical memory by the electronic device, and improve user experience of the electronic device.

S203: The electronic device reclaims a tcache of the target thread.

A method for determining, by the electronic device, whether to reclaim the tcache of the target thread is similar to the method for determining whether to disable the tcache function of the target thread in S202.

In some embodiments, the electronic device may reclaim the tcache of the target thread while disabling the tcache function of the target thread. In this case, the method and a standard for determining, by the electronic device, whether to reclaim the tcache of the target thread are consistent with the method and a standard for determining whether to disable the tcache function of the target thread.

For example, when determining that the target process is a background process, the electronic device disables the tcache functions of all threads in the target process, and reclaims tcaches of these threads.

In some other embodiments, the electronic device may alternatively reclaim only the tcache of the target thread. In this case, the method and the standard for determining, by the electronic device, whether to reclaim the tcache of the target thread may be inconsistent with the method for determining whether to disable the tcache function of the target thread.

For example, the electronic device presets a thread set A and a thread set B. For a thread in the thread set A, the electronic device reclaims a tcache of the thread. For a thread in the thread set B, the electronic device disables a tcache function of the thread.

The electronic device may reclaim the tcache used by the thread, so that idle occupancy of the tcache or the physical memory by the target thread can be reduced. This helps allocate more physical memory to another thread, and helps improve the utilization of the physical memory by different threads on the electronic device and improve user experience of the electronic device.

S204: Optionally, the electronic device reclaims an idle memory page in a slab unit of the target process.

The electronic device reclaims the idle memory page in the slab unit of the target process, the electronic device disables the tcache of the target thread, and the electronic device reclaims the tcache of the target thread. The foregoing actions may be performed independently of each other. That is, the electronic device reclaims the idle memory page in the slab unit of the target process, which is independent of reclaiming the tcache of the target thread by the electronic device. In other words, the electronic device may reclaim only the idle memory page in the slab unit of the target process, or the electronic device may reclaim only the tcache of the target thread, or the electronic device may disable only the tcache function of the target thread.

Alternatively, the electronic device may reclaim both the idle memory page in the slab unit of the target process and the tcache of the target thread. For example, in some embodiments, when determining that the target process is a background process, the electronic device simultaneously reclaims the tcache of the target thread and the idle memory page in the slab unit of the target process.

The electronic device may reclaim an idle memory page in a slab cache used by a thread included in the background process. In comparison with a method in which all idle memory pages in a slab unit are reclaimed as a whole, in this method, an idle memory page reclaimed in time may be allocated to another thread for use. This helps reduce the idle occupancy of the physical memory, and helps improve the utilization of the physical memory and improve user experience of the electronic device.

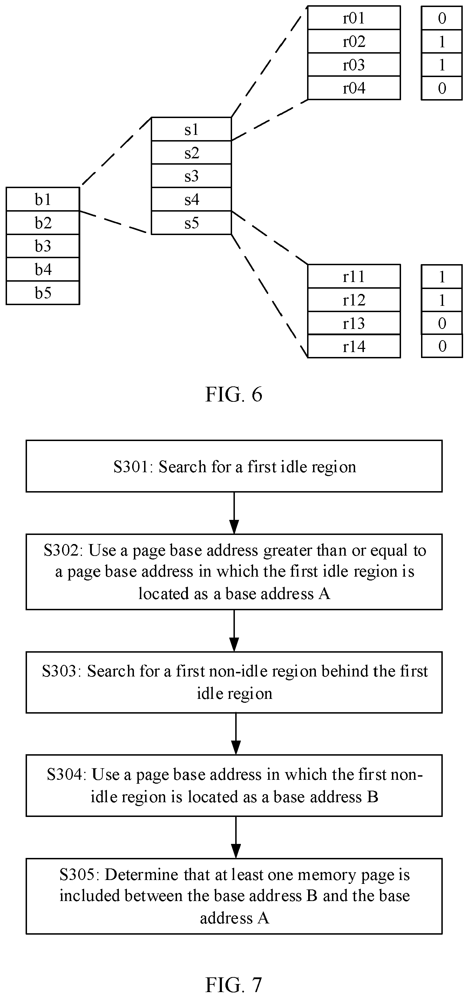

FIG. 6 is a diagram of an example of a process in which the electronic device reclaims the idle memory page in the slab unit of the target process.

It should be noted that FIG. 6 is merely an example of a method in which the electronic device reclaims the idle memory page in the slab unit of the target process. A person skilled in the art may further summarize and deduce another method for reclaiming the idle memory page based on content disclosed in embodiments of this application, and this part of content shall also fall within the protection scope of this application.

The target thread may include a bin manager configured to manage the slab unit. For example, in this embodiment, the target thread includes five bin managers, which are respectively indicated by b1, b2, b3, b4, and b5. Each bin manager may manage a plurality of slab units. For example, in this embodiment, the b1 manager may manage five slab units, and the five slab units are respectively indicated by s1, s2, s3, s4, and s5. Each slab unit may be further divided into a plurality of regions. For example, in this embodiment, the s1 unit may include four regions, and the four regions are respectively indicated by r01, r02, r03, and r04. The s5 unit may include four regions, and the four regions are respectively indicated by r11, r12, r13, and r14.

For each slab unit, an identification table used to identify whether a plurality of regions in the slab unit are in an idle state may be set. The identification table may be referred to as a bitmap. Each identifier in the identification table is used to identify whether each region in a slab unit corresponding to the identification table is in the idle state. For example, an identifier corresponding to the r01 block in the s1 unit is 0, which is used to identify that the r01 block is in the idle state. An identifier corresponding to the r12 block in the unit s5 is 1, which is used to identify that the r12 block is in a non-idle state.

A size of the region is usually smaller than that of a single memory page, but sizes of a few regions may be greater than that of the single memory page. In a slab unit in which a size of a single region exceeds that of a single memory page, an idle memory page included in the region can be reclaimed only when the region is in the idle state. In a slab unit in which a size of a single region is less than that of a single memory page, an idle memory page can be reclaimed only when a plurality of consecutive idle regions form an idle memory page.

The electronic device may traverse, in a specific sequence, all regions in all slab units managed by all bin managers in the target thread. The electronic device may search for an idle region according to a specific algorithm, and may return an idle memory page to the operating system.

For example, the electronic device may traverse all slab units in the manager b1 in a sequence of s1, s2, s3, s4, and s5, and may traverse all bin managers in the target thread in a sequence of b1, b2, b3, b4, and b5.

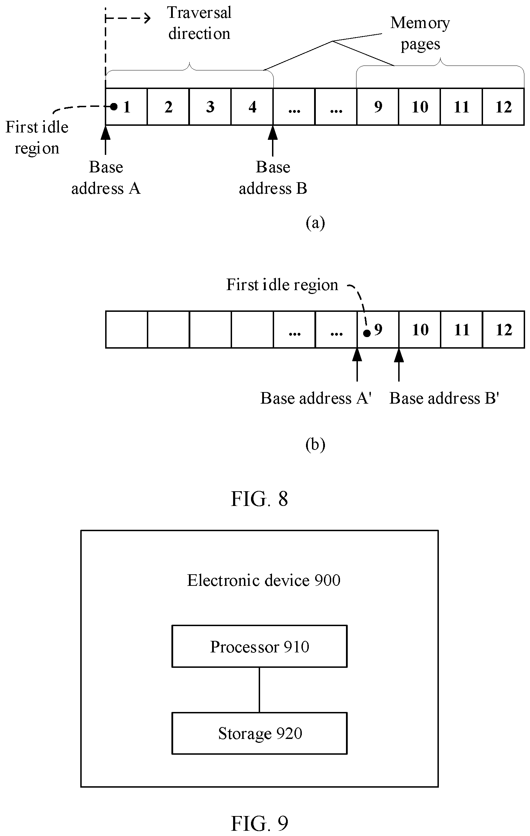

The following describes, with reference to FIG. 7 and FIG. 8, a method for searching for an idle memory page in a slab unit according to an embodiment of this application. For ease of understanding, in the following embodiment, that a size of a single region is less than that of a single memory page is used as an example for description.

S301: Search for a first idle region.

With reference to FIG. 8, as shown in (a) in FIG. 8, a slab unit includes three memory pages, each memory page includes four regions, and there are 12 regions in total. Regions 1 to 4, 9, and 11 are in an idle state, and regions 10 and 12 are in a non-idle state. An electronic device may traverse the region 1 to the region 12 to search for an idle memory page that can be reclaimed.

**In** a process of a first round of traversal, the idle region 1 is used as the first idle region. **In a** subsequent traversal process, the region 9 may be used as the first idle region.

A user-mode memory allocator usually returns one or more consecutive idle memory pages to an operating system kernel. For a to-be-reclaimed memory page, the memory page can be reclaimed only when a plurality of regions included in the entire memory page are in the idle state.

S302: Use a page base address greater than or equal to a page base address in which the first idle region is located as a base address A.

Specifically, if the first idle region is a first region in a memory page in which the first idle region is located, the base address A is a base address of the memory page in which the first idle region is located. Otherwise, the base address A is a base address of a next memory page of the memory page in which the first idle region is located.

In the process of the first round of traversal, because the region 1 is an idle region and is a first region in a memory page in which the region 1 is located, a base address of the memory page in which the region 1 is located may be used as the base address A. Alternatively, a base address greater than the base address of the region 1 may be used as the base address A. For example, a base address of a memory page is 4K. In this case, 4K, 8K, or 12K may be used as the base address A.

Similarly, in the subsequent traversal process, the base address of the region 9 may be used as a base address A'.

S303: Search for a first non-idle region behind the first idle region.

In the process of the first round of traversal, the region 5 is the first non-idle region behind the region 1. In the subsequent traversal, the region 10 is the first non-idle region behind the region 9.

S304: Use a page base address in which the first non-idle region is located as a base address B.

Based on the search result in S303, a page base address in which the region 5 is located may be used as the base address B, and a page base address in which the region 10 is located may be used as a base address B'.

S305: Determine that at least one idle memory page is included between the base address B and the base address A.

In the process of the first round of traversal, one memory page is included between the base address B and the base address A, and all regions in the memory are in the idle state. In this case, the memory page is an idle memory page. In the subsequent traversal process, no memory page is included between the base address B' and the base address A'. In this case, no idle memory page can be reclaimed.

When space less than one memory page is included between the base address B and the base address A, the electronic device may perform a next round of traversal, to re-determine the base address A and the base address B.

For the idle memory page between the base address B and the base address A, the electronic device may return the idle memory page to the operating system, that is, reclaim the idle memory page. In the example shown in FIG. 8, a memory page in which the regions 1 to 4 are located may be reclaimed and returned to the operating system, but a memory page in which the region 9 is located is not returned to the operating system.

In this embodiment of this application, the plurality of regions in the slab unit are traversed in a specific sequence, idle memory pages included in the plurality of idle regions are reclaimed, and a plurality of regions that do not include an idle memory page are not reclaimed. In comparison with an overall reclamation solution, in this solution, an idle occupancy rate of an idle memory page in a slab unit can be effectively reduced. In addition, adverse effect of reclamation of idle memory on a process or a thread that has been run is also reduced.

It should be understood that sequence numbers of the foregoing processes do not mean an execution sequence in the foregoing method embodiments. The execution sequence of the processes should be determined based on functions and internal logic of the processes, and should not constitute any limitation on the implementation processes of embodiments of this application.

Based on a same inventive concept, as shown in FIG. 9, an embodiment of this application further provides an electronic device 900. The electronic device 900 includes a processor 910 and a storage 920. The processor is configured to perform a processing operation performed by the electronic device in embodiments shown in FIG. 3(a) to FIG. 8, for example, determine, based on whether a process is a foreground process, whether to enable a tcache function of a target thread. The storage stores one or more computer programs. The one or more computer programs include instructions. When the instructions are executed by one or more processors, any one of the foregoing memory management methods is performed.

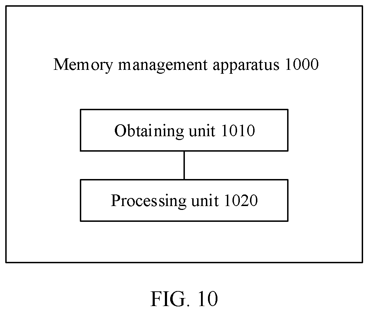

As shown in FIG. 10, an embodiment of this application further provides a memory management apparatus 1000. The memory management apparatus 1000 includes an obtaining unit 1010 and a processing unit 1020. The obtaining unit is configured to obtain a first attribute of a target process, a second attribute of a target thread, and the like. The processing unit is configured to perform a processing operation performed by the electronic device in embodiments shown in FIG. 3(a) to FIG. 8, for example, determine, based on whether a process is a foreground process, whether to enable a tcache function of a target thread.

An embodiment of this application further provides a computer program product. The computer program product includes computer program code. When the computer program code is run on a computer, the computer is enabled to implement the methods in embodiments shown in FIG. 3(a) to FIG. 8.

An embodiment of this application further provides a computer-readable storage medium. The computer-readable medium stores computer instructions. When the computer instructions are run on a computer, the computer is enabled to implement the methods in embodiments shown in FIG. 3(a) to FIG. 8.

An embodiment of this application further provides a chip including a processor configured to read instructions stored in a storage. When the processor executes the instructions, the chip is enabled to implement the methods in embodiments shown in FIG. 3(a) to FIG. 8.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A memory management method, wherein the method is applied to an electronic device, and the method comprises:
obtaining, by the electronic device, a first attribute of a target process, wherein the first attribute indicates that the target process is a foreground process or a background process, and the target process comprises a target thread; and
determining, by the electronic device based on the first attribute, to enable or disable a thread local cache function of the target thread.

2. The method according to claim 1, wherein the determining, by the electronic device based on the first attribute, to enable or disable a thread local cache function of the target thread comprises:
when the first attribute indicates that the target process is a foreground process, determining, by the electronic device with reference to a second attribute of the target thread, to enable the thread local cache function of the target thread, wherein the second attribute indicates that the target thread is a key thread, and the key thread is a thread related to user interaction; and
the method further comprises:
enabling, by the electronic device, the thread local cache function of the target thread.

3. The method according to claim 2, wherein the key thread comprises one or more of the following: a thread for receiving a user input event, a user interface thread for drawing an interface, and a render thread for rendering a picture.

4. The method according to claim 2 or 3, wherein before the determining, by the electronic device based on the first attribute, to enable or disable a thread local cache function of the target thread, the method further comprises:
in response to a first operation of a user, setting, by the electronic device, the first attribute to indicate that the target process is a foreground process.

5. The method according to any one of claims 1 to 4, wherein the method further comprises:
in response to a second operation of the user, setting, by the electronic device, the first attribute to indicate that the target process is a background process.

6. The method according to claim 5, wherein the determining, by the electronic device based on the first attribute, to enable or disable a thread local cache function of the target thread comprises:
when the first attribute indicates that the target process is a background process, determining, by the electronic device based on the first attribute, to disable the thread local cache function of the target thread; and
disabling, by the electronic device, the thread local cache function of the target thread.

7. The method according to claim 5 or 6, wherein the method further comprises:
reclaiming, by the electronic device, a thread local cache of the target thread.

8. The method according to any one of claims 5 to 7, wherein the method further comprises:
reclaiming, by the electronic device, an idle memory page in a slab unit of the target process.

9. A memory management method, wherein the method is applied to an electronic device, and the method comprises:
obtaining, by the electronic device, a first attribute of a target process, wherein the first attribute indicates that the target process is a foreground process or a background process; and
determining, by the electronic device based on the first attribute, whether to reclaim an idle memory page in a slab unit of the target process.

10. The method according to claim 9, wherein the method further comprises:
when the first attribute indicates that the target process is a background process, determining, by the electronic device, to reclaim the idle memory page in the slab unit of the target process; and
reclaiming, by the electronic device, the idle memory page in the slab unit of the target process.

11. The method according to claim 10, wherein the target process comprises a target thread, and the method further comprises:
disabling, by the electronic device, a thread local cache function of the target thread.

12. The method according to claim 11, wherein the method further comprises:
reclaiming, by the electronic device, a thread local cache of the target thread.

13. An electronic device, comprising a processor and a storage, wherein the storage is configured to store program instructions, and the processor is configured to invoke the program instructions to perform the method according to any one of claims 1 to 8.

14. An electronic device, comprising a processor and a storage, wherein the storage is configured to store program instructions, and the processor is configured to invoke the program instructions to perform the method according to any one of claims 9 to 12.

15. A memory management apparatus, comprising a module configured to implement the method according to any one of claims 1 to 8 or claims 9 to 12.

16. A computer-readable storage medium, wherein the computer-readable storage medium stores a computer program, and when the computer program is executed by a computer, the method according to any one of claims 1 to 8 or claims 9 to 12 is implemented.

17. A chip product, comprising a processor configured to read instructions stored in a storage, wherein when the processor executes the instructions, the chip is enabled to implement the method according to any one of claims 1 to 8 or claims 9 to 12.
